# EUROPEAN PATENT APPLICATION

(11) **EP 2 887 210 A1**
(43) Date of publication of application: **24.06.2015**
(21) Application number: 13198556.6
(22) Date of filing: 19.12.2013
(51) Int. Cl.: G06F 9/44

(54) **Method and apparatus for automatically generating a help system for a software application**

(71) Applicant: Siemens Aktiengesellschaft, 80333 München (DE)
(72) Inventor: K C, Sibin, 686673 Ernakulam (IN)

(57) **Abstract**

The present invention relates to a method and apparatus for automatically generating a help system for a software application. In one embodiment, a method includes obtaining, using a processor (110), a plurality of graphical user interface (GUI) screens (200) associated with the software application from a GUI database (106), wherein each of the GUI screens (200) comprises one or more GUI objects (202). The method further includes determining functionality associated with the one or more GUI objects (202) in each of the GUI screens (200). Moreover, the method includes automatically generating the help system (251) associated with the software application using the GUI screens (200) and the determined functionality.

## Description

The present invention generally relates to a help system, and more particularly relates to automatic generation of a help system for a software application.

Many devices or apparatuses available in the market are provided with a help system. A help system provides assistance to a user, viz. operator, of a device or apparatus in smooth operation of the device. Generally, the help system contains textual description along with one or more pictures that describes features of the device or a software application installed therein.

The help system is prepared by document engineer or technical writer who needs to have a detailed understanding of features of a device or software application(s) installed in the device. As such manual compilation of a help system for a newly developed device is cumbersome and time consuming activity.

Typically, the help system is embodied in printed manuals or electronic documentation. The electronic help system may be stored within the device or onto a remote server connected to the device. The help system in printed form or in electronic form does not enable the user to understand how the device needs to be operated; rather provide description of the features of the device or the software application(s). Also, the currently available help system fails to provide easy and quick access to topics during operation of the device in real time.

In light of foregoing, there is a need for help system which can be quickly and easily accessed during use of a software application.

It is therefore an object of the present invention to automatically generate a help system which can be quickly and easily accessed during use of a software application.

The object of the present invention is achieved by a method of automatically generating a help system for a software application. The method comprises obtaining, using a processor, a plurality of graphical user interface (GUI) screens associated with the software application from a GUI database, wherein each of the GUI screens comprises one or more GUI objects. The GUI screens are program interfaces that allow users to interact with the software application through the GUI objects. When the software application is developed, the GUI screens containing the GUI objects are stored in the GUI database. The GUI objects may be icons, pointers, press buttons, menus, pointing devices, and so on. The method also comprises determining functionality associated with the one or more GUI objects in each of the GUI screens. Each of the GUI objects may be associated with a function to be performed when the user interacts with said each GUI object in run time of the software application.

The method further comprises automatically generating the help system for the software application using the GUI screens and the determined functionality. The help system comprises help windows corresponding to the GUI screens, where each help
window comprises one or more elements corresponding to the GUI objects in the associated GUI screen. Each element in said each help window is adapted to simulate function of the corresponding GUI object in the associated GUI screen of the software application. Thus, the help system is automatically generated by the processor, thereby eliminating the need to manually compile the help system by a document engineer. The help system of the present invention facilitates the user to use the GUI objects in the GUI screens of the software application by interacting with the corresponding elements in the respective help windows of the help system, thereby making the help system quickly and easily accessible to the user during use of the software application.

Therein, the functionality associated with the one or more GUI objects in the respective GUI screens is determined using an intermediate file. The intermediate file comprises a business logic associated with the respective GUI objects. The business logic defines functionality of the GUI objects in the GUI screens. The corresponding business logic is executed when the user interfaces with the associated GUI object in the GUI screen. In one exemplary implementation, the business logic associated with each of the GUI objects in the GUI screens may be stored as a Hypertext Markup Language (HTML) command. The business logic stored as HTML commands in the intermediate file enables the processor to determine the functionality of the GUI objects in the GUI screens.

Therein, to generate the help system, at first, the help windows are generated from the GUI screens. The help windows are generated by converting the GUI screens into images. Then, textual description corresponding to each of the GUI objects in the GUI screens is obtained from a source code file. The source code file contains source code of the software application. The source code comprises textual description of the GUI objects in the GUI screens. The textual description associated with each GUI object in the GUI screens may serve as help information associated with corresponding element in the help windows. Thus, the help information need not be manually compiled rather is dynamically obtained from the source code file of the software application. This ensures accuracy of the help information associated with the respective GUI objects in the GUI screens. Thereafter, the textual description associated with the GUI objects in the GUI screens is mapped to the respective elements in the help windows. The textual description is mapped to the respective elements in the help windows to enable the user to understand use of the GUI objects corresponding to the elements when the help window containing the elements is displayed on a display unit. Additionally, a command is mapped to each of the elements in the help windows based on the functionality of the corresponding GUI object. The command is obtained from the intermediate file. The command corresponds to the business logic associated with the respective GUI object. The command is mapped to each of the elements such that function of the GUI object is simulated on the display unit when the user interfaces with the corresponding element in the help window. For example, when the user interfaces with the corresponding element, the command mapped to the element is executed. Accordingly, a new help window is displayed on the display unit based on the element interfaced by the user. Thus, a real time interfacing experience with the software application is provided to the user by mapping the command to the respective elements in the help windows of the help system. Moreover, the real time interfacing experience can be provided during interaction with the software application, thereby providing easy and quick access to the user.

Furthermore, the method comprises detecting a touch based event corresponding to an element in one of the help windows of the help system and performing simulation of the software application in real time using the help system in response to the detected touch based event. Thus, the user can experience as how the software application would function when interfaced with a GUI object corresponding to the element touched by the user, thereby making it easy for the user to interact with the software application. When the touch based event associated with the element in the displayed help window is detected, the command mapped to the element in said one of the help windows is executed in response to the detected touch based event. Accordingly, when the command is executed, the user is directed to a new help window of the help system in real time, wherein the new help window corresponds to one of the GUI screens of the software application.

Moreover, the method comprises detecting a touch based event corresponding to the element in one of the help windows of the help system displayed on the display unit, fetching detailed help information corresponding to the element from a help database in response to the detected touch based event, and displaying the detailed help information corresponding to the element on the display unit in real time. Thus, the user is provided with the detailed help information associated with the GUI object corresponding to the element when the user interfaces with a dialog box displaying brief help information.

The object is also achieved by a device for automatically generating a help system for a software application. The device comprises a processor and a memory coupled to the processor. The memory comprises a help system generation module stored in the form of machine readable instructions. The help system generation module is capable of obtaining a plurality of graphical user interface (GUI) screens associated with a software application from a GUI database, wherein each of the GUI screens comprises one or more GUI objects. The help system generation module is also capable of determining functionality associated with the one or more GUI objects in each of the GUI screens. Moreover, the help system generation module is also capable of automatically generating a help system associated with the software application using the GUI screens and the determined functionality.

Therein, the help system generation module determines the functionality of the one or more GUI objects in said each of the GUI screens using an intermediate file, wherein the intermediate file comprises business logic associated with the respective GUI objects.

Therein, in automatically generating the help system, the help system generation module is capable of generating help windows from the GUI screens, wherein each of the help windows comprises one or more elements corresponding to the one or more GUI objects in the respective GUI screens. Furthermore, the help system generation module is capable of mapping textual description to the corresponding one or more elements in the help windows. Moreover, the help system generation module is capable of mapping a command to each of the one or more elements in the help windows based on the functionality associated with the respective one or more GUI objects.

Therein, in mapping the textual description to the corresponding one or more elements in the help windows, the help system generation module is capable of obtaining the textual description associated with each of the GUI objects in the GUI screens from a source code file of the software application and mapping the obtained textual description to the associated elements in the help windows.

In one embodiment, the help system generation module may be a part of compiler of the software application, stored in the memory, which compiles source code of the software application into an executable file as well as automatically generates the help system for the software application. Thus, the help system can be generated automatically during development of the software application.

The device may be a personal computer, a laptop computer, a server computer, a tablet, and the like.

The object of the present invention is achieved by a device for accessing the help system. The device comprises a touch sensitive display unit, a processor coupled to the touch sensitive display unit. The touch sensitive display unit is capable of detecting a touch based event corresponding to an element in a help window of the help system. The processor is capable of performing simulation of the software application in real time using the help system in response to the detected touch based event.

Therein, in performing simulation of the software application in real time using the help system based on the touch based event, the processor is capable of executing a command mapped to the element in said one of the help windows in response to the detected touch based event, and displaying a corresponding help window from the help windows on the touch sensitive display unit in real time.

Further, the touch sensitive display unit is capable of detecting a touch based event corresponding to an element in one of the help windows of the help system. Accordingly, the processor is capable of fetching detailed help information corresponding to the element from a help database in response to the detected touch based event, and displaying the detailed help information corresponding to the element on the touch sensitive display unit in real time.

The processor performs above mentioned steps upon execution of machine readable instructions stored in a memory of the device of the present invention.

The device may be a human machine interface (HMI) device which can be desktop computer, laptop computer, hand-held devices, personal digital assistants (PDAs), mobile telephones, kiosks, Automatic Teller Machine (ATMs), Electronic display and interaction systems, portable entertainment systems and microprocessor based electronic systems.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary computing device capable of generating a help system for a software application according to the present invention;
- FIG 2A: illustrates an exemplary graphical user interface (GUI) screen associated with a software application;
- FIG 2B: illustrates a help window of the help system providing help information associated with the GUI screen illustrated in FIG 2A according to the present invention;
- FIG 3: is a schematic representation illustrating automatic generation of the help system according to one embodiment of the present invention;
- FIG 4: is a schematic representation illustrating automatic generation of the help system according to another embodiment of the present invention;
- FIG. 5: is a schematic representation illustrating automatic generation of the help system according to yet another embodiment of the present invention;
- FIG 6: is a process flowchart illustrating an exemplary method of automatically generating the help system according to the present invention;
- FIG 7: illustrates a block diagram of an exemplary human machine interface (HMI) device capable of providing access to the help system according to the present invention; and
- FIG 8: is a process flowchart illustrating a method of accessing the help system according to the present invention.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

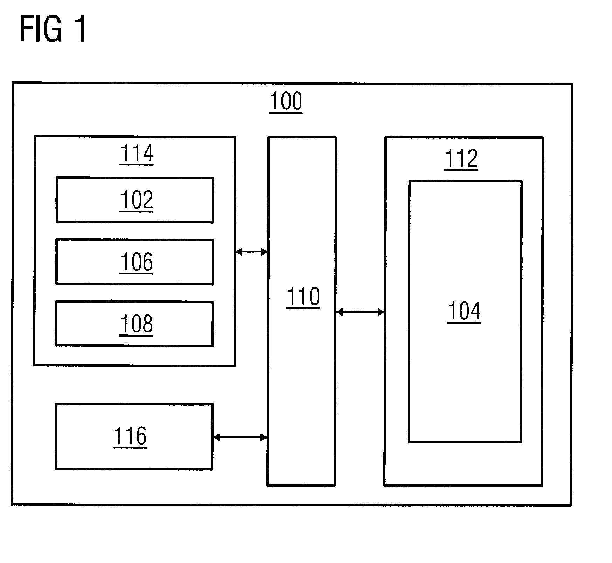

FIG 1 illustrates a block diagram of an exemplary computing device 100 capable of generating a help system for a software application according to the present invention. The computing device 100 may be a personal computer, a laptop computer, a server computer, a tablet and the like. In FIG 1, the computing device 100 includes a processor 110, a memory 112, a storage unit 114, and input/output devices 116.

The processor 110, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 110 may also include embedded controllers, such as generic or programmable logic devices or arrays, application specific integrated circuits, single-chip computers, and the like.

The memory 112 may be volatile memory and non-volatile memory. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 112 includes a help system generation module 104 for automatically generating a help system for a software application, according to one or more embodiments described above.

The help system generation module 104 may be stored in the form of machine-readable instructions on any of the above-mentioned storage media and may be executed by the processor 110. For example, when executed by the processor 110, the machine readable instructions, cause the processor 110, to obtain Graphical User Interface (GUI) screens associated with the software application from a GUI database 106 stored in the storage unit 114. The GUI database 106 contains GUI screens associated with the software application. GUI screens are program interfaces that allow users to use a software application through GUI objects (also commonly known as GUI elements). The GUI objects may include pointers, pointing device, icons, menus, press buttons, and so on.

The GUI screens stored in the GUI database 106 may be application specific GUI screens. The application specific GUI screens are GUI screens that are specifically designed for a particular software application. In one exemplary implementation, the GUI screens may be application specific touch based GUI screens. For example, the application specific touch based GUI screens may be compatible with touch sensitive display devices such as smart phones, tablets, human machine interfaces in Industrial automation system and so on.

Furthermore, the machine readable instructions cause the processor 110 to generate help windows using the obtained GUI screens. The help windows contain elements corresponding to GUI objects in the respective GUI screens. Thereafter, the machine readable instructions cause the processor 110 to obtain textual description corresponding to each of the GUI objects in the GUI screens from a source code file 102 stored in the storage unit 114. The textual description obtained from the source code file 102 contains brief help information associated with each element in the help windows. Then, the machine readable instructions cause the processor 110 to map the textual description to the respective element in the help windows.

Additionally, the machine readable instructions cause the processor 110 to determine functionality of each of the GUI objects in the obtained GUI screens based on business logic associated with said each GUI object in the intermediate file database 108. The intermediate file database 108 contains an intermediate file that defines business logic associated with each of the GUI objects in the GUI screens. The business logic defines functionality of respective GUI objects in the GUI screens. For example, when a user interfaces with a GUI object in one of the GUI screens in runtime of the software application, the associated business logic is executed. In some embodiments, the business logic is stored in the intermediate file database 108 as HTML commands. In other embodiments, the business logic is stored in the intermediate file database 108 as other markup language commands such as VBscript, and Javascript.

Accordingly, the machine readable instructions cause the processor 110 to map a command to each of the elements in the help windows based on the functionality of the corresponding GUI object. For example, a mapping file may be maintained which indicates a mapping between the functionality associated with the elements and corresponding command. The machine readable instructions may cause the processor to refer to the functionality associated with a particular element in the mapping file and map corresponding command to the particular element in real time.

In one embodiment, the machine readable instructions may be embodied on a compact disk-read only memory (CD-ROM) and loaded from the CD-ROM to a hard drive in the non-volatile memory.

The storage unit 114 may be a non-transitory storage medium configured for storing files and databases. For example, the storage unit 114 contains the source code file 102 containing source code of the software application, the GUI database 106 containing the GUI screens of the software application and the intermediate file database 108 containing commands corresponding to the business logic associated with the GUI objects in the GUI screens. It can be noted that the source code file 102, the GUI database 106 and the intermediate file database 108 may be located at a remote server and may be remotely accessed via a network connection.

The input/output devices 116 may include keyboard, keypad, monitor, touch sensitive display screen, mouse and the like. The input device/output devices 116 enable the user to interface with the computing device 100 for generating the help system. For example, the input device may enable selection of the source code file 102 from the storage unit 114 for generating the help system while the output device may display the help system to the user.

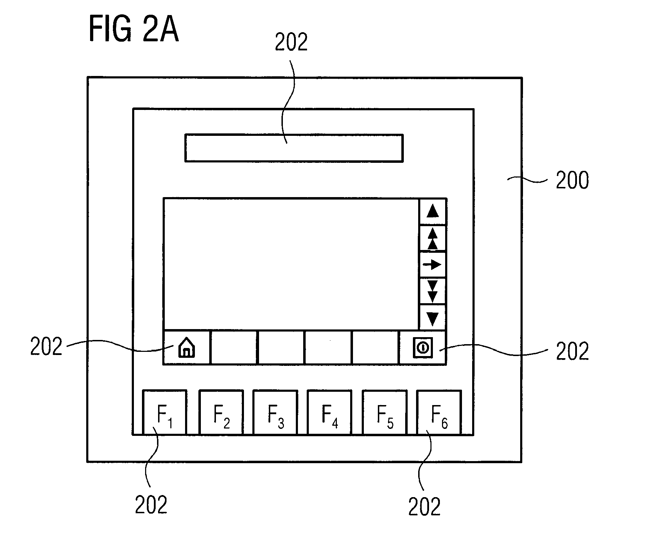

FIG 2A illustrates an exemplary graphical user interface (GUI) screen 200 associated with a software application. In FIG 2A, the GUI screen 200 includes GUI objects 202. The GUI objects 202 are control buttons which enable a user to perform an action through touching or clicking the control buttons. For example, the control buttons may include home icon, power on/off icon, menu icon, up/down icon, press buttons, control icons and so on.

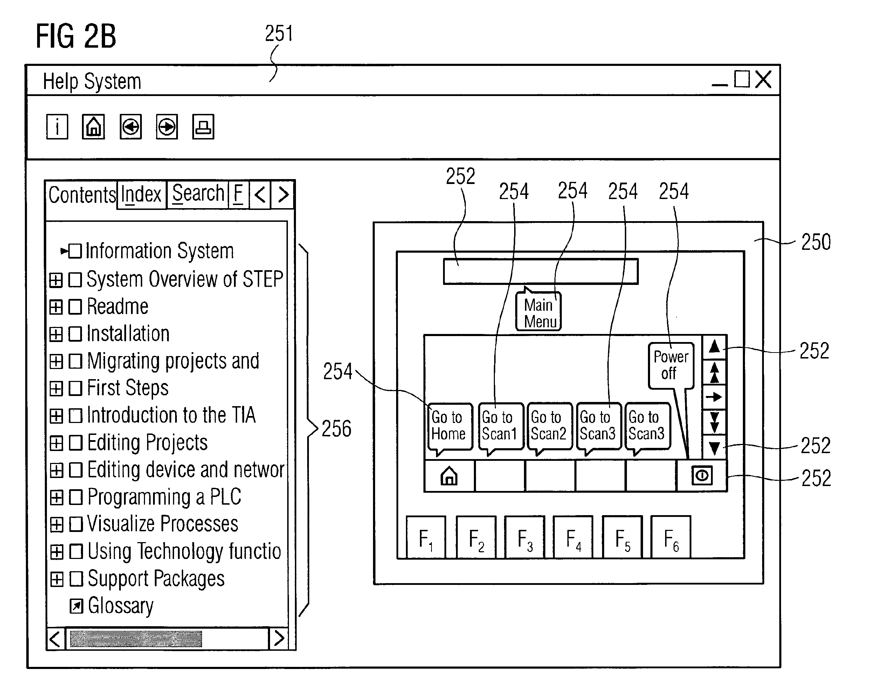

FIG 2B illustrates a help window 250 of a help system 251 providing help information associated with the GUI screen 500 illustrated in FIG 2A according to the present invention. The help window 250 of FIG 2B corresponds to the graphical user interface screen 200 of the software application. The help window 250 of the help system 251 is generated by the help system generation module 104 by processing the GUI screen 200 of the software application. The help window 250 includes elements 252, dialog boxes 254, and a content field 256. As can been seen from FIG 2B, the elements 252 correspond to the GUI objects 202.

Each of the elements 252 are sensitive to touch by a user. When a user touches any of the elements 252 in the help window 250 via a touch sensitive display, a new help window 250 is displayed by the help system 251. The new help window 250 is displayed based on the function of the GUI object corresponding to said element touched by the user. In some embodiments, upon detecting touch gesture, the help system 251 invokes a Hyper Text Markup Language (HTML) command corresponding to the element 252 and executes the HTML command. This may result in displaying a new help window 250 based on the touch gesture. For example, when the user interfaces with a 'Home' element in the help window 250, a new help window 250 corresponding a 'home screen' of the software application is displayed as the GUI object 'Home' 202 in the GUI screen 200 of the software application is meant for displaying the home screen of the software application. In this manner, the help system 251 can provide real time interfacing experience with the software application to the user.

The help window 250 also displays a dialog box 254 with brief help information associated with each of the GUI objects 202 in the GUI screen 200. The brief help information is displayed adjacent to the corresponding elements 252 in the help window 250 via the dialog box 254. This would assist the user in understanding use/function of each of the GUI objects 202 in the GUI screen 200 through the help window 250 of the help system 251. In some embodiments, the dialog box 254 displaying the brief help information is touch-sensitive. That is, a new pop-up window displaying detailed help information associated with a particular GUI object 202 is opened when a user touches the dialog box 254. The content field 256 displays content index of the help system 251.

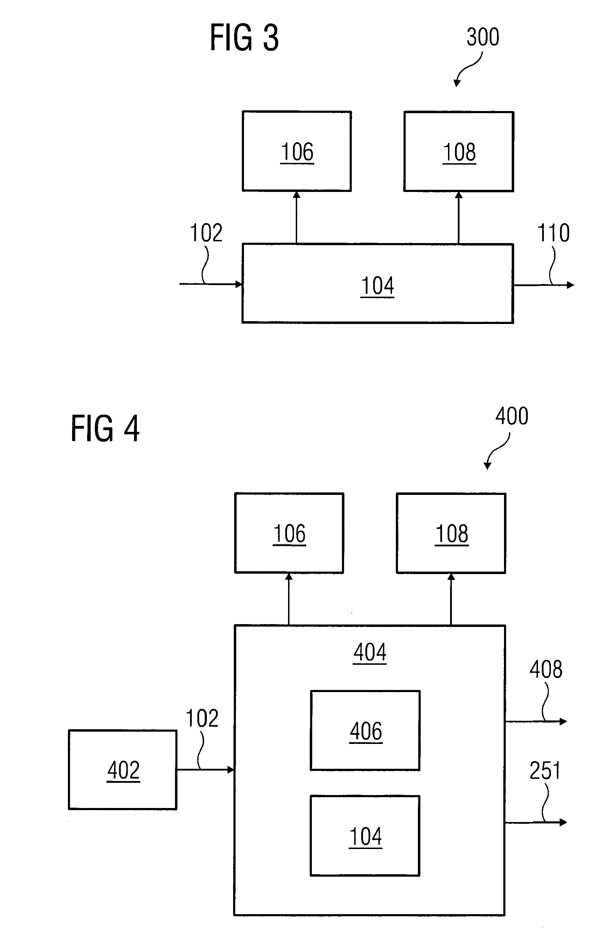

FIG 3 is a schematic representation 300 illustrating automatic generation of the help system 251 according to one embodiment of the present invention. The help system generation module 104 may be stored in the form of machine readable instructions in the memory of the computing device 100 and executed by the processor 251 to generate a help system 251.

In an exemplary operation, the help system generation module 104 obtains the GUI screens 200 associated with the software application, for which a help system 251 is to be generated, from the GUI database 106. Then, the help system generation module 104 generates help windows 250 using the obtained GUI screens 200. The help windows 250 contain elements 252 corresponding to the GUI objects 202 in the respective GUI screens 200. In one exemplary implementation, the help system generation module 104 generates help windows 250 in a HTML format by processing the GUI screens 200.

Furthermore, the help system generation module 104 obtains the textual description corresponding to each of the GUI objects 202 in the GUI screens 200 from the source code file 102. The textual description obtained from the source code file 102 contains brief help information associated with each element 252 in the help windows 250. For example, the brief help information may contain information on use of the GUI objects 202 corresponding to the elements 252 displayed in the help window 250.

The help system generation module 104 maps the textual description to the respective element 252 in the help windows 250. The mapping of the textual description with the elements 252 in the help windows 250 enables display of dialog boxes 254 with the brief help information adjacent to the respective elements 252 in each of the help windows 250. In some embodiments, the dialog boxes 254 are sensitive to touch and are configured to display detailed help information associated with the respective element in a separate pop-up window when the help pop-up is touched by the user. The detailed help information may be additional help information tagged to the dialog boxes 254 to enable user to know more about the elements 252 in each of the helps windows 250.

The help system generation module 104 determines functionality of each of the GUI objects 202 in the obtained GUI screens 200 based on the business logic associated with said each GUI object 202. Accordingly, the help system generation module 104 maps a command to each of the elements 252 in the help windows 250 based on the functionality of the corresponding GUI object 202. In one exemplary implementation, a command is a HTML command stored in the intermediate file database 108 that corresponds to the business logic associated with a GUI object 202 corresponding to an element 252 in a help window 250. The command may invoke the business logic and therefore transitions from one help window 250 to another when the user interfaces with a particular element 252 in the help window 250. Since, each of the help windows 250 corresponds to one of the GUI screens 200 of the software application, transitioning from one help window 250 to another in real time when the user interact with one of the elements 252 in the help window 250 would provide the user real time interfacing experience with the software application.

Thus, in the manner described above, the help system generation module 104 automatically generates the help system 251 for the software application. In some embodiments, the help system generation module 104 enables to enrich the help system 251 by adding additional help information such as pre-requisites for the software application, installation procedures, troubleshooting techniques and so on.

FIG 4 is a schematic representation 400 illustrating automatic generation of the help system 251 according to another embodiment of the present invention. It can be seen from FIG 4 that the schematic representation 400 is similar to the schematic representation 300 of FIG 3, except that the help system generation module 104 is a part of a compiler 404.

A source code generator 402 generates the source code file 102 containing a source code of a software application. The source code generator 402 feeds the source code file 102 to the compiler 404. Alternatively, in absence of the source code generator 402, the source code file 102 may be remotely generated and stored at a remote server (not shown). In such case, the compiler 404 may access the source code file 102 from the remote server via a network connection.

The compiler 404 includes an executable file generator 406 and the help system generation module 104. The executable file generator 406 transforms the source code of the software application in the source code file 102 into an executable file 408. The executable file 408 is a file containing machine code instructions that causes a human machine interface device or any other computing device to perform functionality of the software application. The process of transforming the source code into executable file is well known to the person skilled in the art.

The help system generation module 104 automatically generates the help system 251 for the software application in a manner described in the description of FIG 3. The help system generation module 104 may generate the help system 251 in parallel to generation of the executable file 408. Alternatively, the help system generation module 104 may generate the help system 251 before or after generation of the executable file 408. According to the embodiment depicted in FIG 4, the compiler 404 is capable of generating the executable file 408 of the software application as well as generating the help system 251 for the software application. Hence, the need for manually compiling the help system 251 for the software application is eliminated.

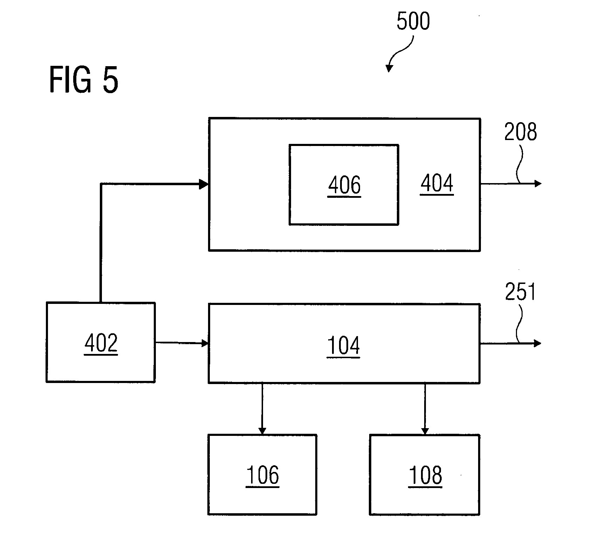

FIG 5 is a schematic representation 500 illustrating automatic generation of the help system 251 according to yet another embodiment of the present invention. The schematic representation 500 is similar to the schematic representation 400 of FIG 4 except that the help system generation module 104 is independent of the compiler 404. According to the embodiment depicted in FIG 5, the help system generation module 104 and the compiler 404 resides within the memory 112 of the computing device 100 but functions independently. In this embodiment, the complier 404 transforms the source code of the software application in the source code file 102 into the executable file 408 while the help system generation module 104 automatically generates the help system 251 for the software application.

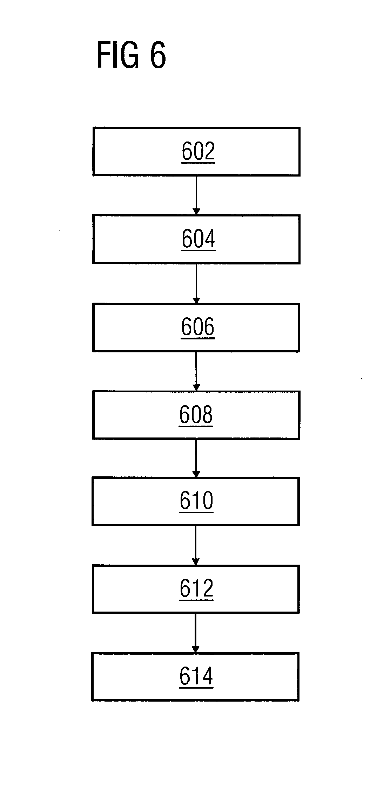

FIG 6 is a process flowchart 600 illustrating an exemplary method of automatically generating a help system 251 according to the present invention. The process 600 of generating a help system consists of steps 602 to 614. At step 602, GUI screens 200 associated with a software application are obtained from a GUI database 106. At step 604, help windows 250 of a help system 251 with one or more elements 252 are generated using the obtained GUI screens 202. For example, the help windows 250 are generated in a Hyper Text Markup Language (HTML) format. The help windows 250 are generated such that the elements 252 in each help window 250 correspond to GUI objects 202 in the respective GUI screens 200.

At step 606, textual description associated with each of the GUI objects 202 in the GUI screens 200 is obtained from a source code of the software application in a source code file 102. At step 608, the textual description is mapped to corresponding elements 252 in the help windows 250. At step 610, functionality of each of the GUI objects 202 in the GUI screens 200 is determined based on a business logic associated with said each of the GUI objects 202. For example, the business logic associated with said each of the GUI objects 202 correspond to a functionality performed by a human machine interface (HMI)device when a user interfaces with said each of the GUI objects 202 in real time.

At step 612, a command is mapped to each of the elements 252 in the help windows 250 of the help system 251 based on the associated functionality. For example, the command may be HTML command which when processed, when the user interfaces with the associated element, may result in executing the business logic. At step 614, the complete help system 251 for the software application is outputted. If desired, the help system 251 can be enriched by adding further help information such as pre-requisites for the software application, installation procedures, troubleshooting techniques and so on.

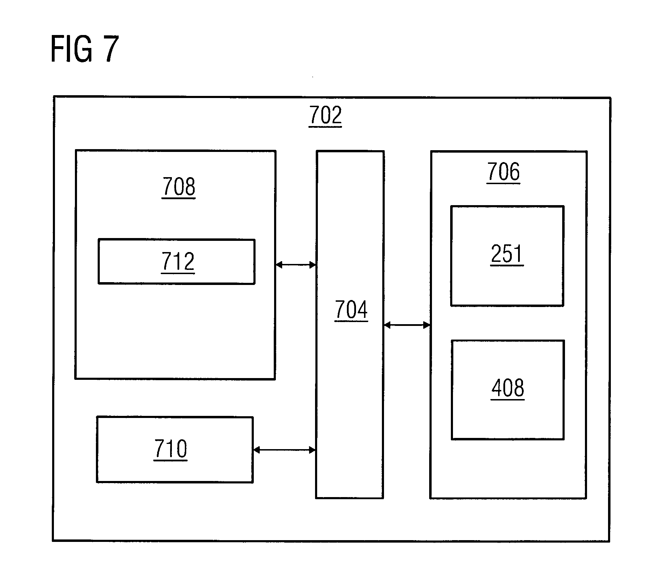

FIG 7 illustrates a block diagram of an exemplary human machine interface (HMI) device 702 capable of providing access to a help system according to the present invention. The HMI device may include but not limited to computer systems, laptop devices, hand-held devices, personal digital assistants (PDAs), mobile telephones, kiosks, Automatic Teller Machine (ATMs), Electronic display and interaction systems, portable entertainment systems and microprocessor based electronic systems. In FIG 7, the HMI device 702 includes a processor 704, memory 706, a storage unit 708, and touch sensitive display unit 710.

The processor 702, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 702 may also include embedded controllers, such as generic or programmable logic devices or arrays, application specific integrated circuits, single-chip computers, and the like.

The memory 706 may be volatile memory and non-volatile memory. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 706 includes the executable file 208 capable of performing one or more functions of the HMI device 702 based on user inputs. The memory 706 also includes the help system 251 capable of providing assistance to the user to use the software application, according to one or more embodiments described above.

The help system 251 may be stored in the form of machine-readable instructions (e.g., HTML format) on any of the above-mentioned storage media and may be executed by the processor 704. For example, when executed by the processor 704, the machine readable instructions, cause the processor 704, to execute a command mapped to an element 252 in a help window 250 touched by a user in response to a touch based event detected by the touch sensitive display unit 710. The machine readable instructions cause the processor 704 to display a corresponding help window 250 on the touch sensitive display unit 710 based on the execution of the command. Furthermore, the machine readable instructions cause the processor 704 to fetch detailed help information corresponding to the element 252 from a help database 712 stored in the storage unit 708 in response to the touch based event detected by the touch sensitive display unit 710. Accordingly, the machine readable instructions cause the processor 704 to display the detailed help information corresponding to the element 252 on the touch sensitive display unit 710 in real time. In one embodiment, the machine readable instructions may be embodied on a compact disk-read only memory (CD-ROM) and loaded from the CD-ROM to a hard drive in the non-volatile memory.

The storage unit 708 may be a non-transitory storage medium configured for storing the help database 712. For example, the help database 712 contains the help windows 250 with the elements 252, the predetermined commands mapped to the respective elements 252 and the help information mapped to the elements 252 in each of the help windows 250.

The touch sensitive display unit 710 may be a human machine interface (HMI) that enables the user to interface with the HMI device 702. In one embodiment, the touch sensitive display unit 710 is capable of detecting a touch based event corresponding to an element 252 in a help window 250 of the help system 251. In another embodiment, the touch sensitive display unit 710 is capable of detecting a touch based event corresponding to a dialog box 254 displaying brief help information associated with an element 252 in a help window 250 of the help system 251. In yet another embodiment, the touch sensitive display unit 710 is capable of displaying a help window with one or more elements corresponding to GUI objects in a GUI screen of the software application. In further another embodiment, the touch sensitive display unit 710 is capable of displaying detailed help information associated with an element 252 in a help window 250 based on a touch based event.

One can envision that, the HMI device 702 may also recognize other types of non-touch based gestures such as hover based gesture, voice gesture and the like to interface with the HMI device 702. Also, other forms of input/output devices either independently or in combination can be implemented at the HMI device 702 to perform the functionality of the touch sensitive display unit 710.

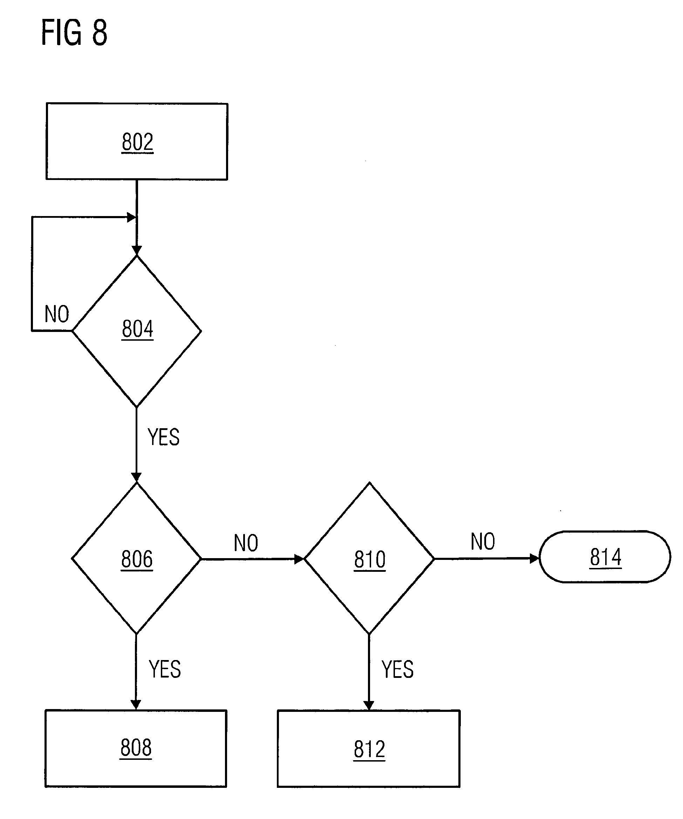

FIG 8 is a process flowchart 800 illustrating a method of accessing the help system 251 according to the present invention. When a user wishes to access the help system 251 on the HMI device 702, one of the help windows 250 of the help system 251 is displayed by the HMI device 700 on the touch sensitive display unit 710, at step 802. The user may access the help system 251 during use of the software application. At step 804, it is determined whether a touch event in the displayed help window 250 is detected. The user may touch a particular element 252 in the displayed help window 250 to perform simulation of the software application. Alternatively, the user may touch a dialog box 254 displaying brief help information to view detailed help information in a pop-up window. If no touch event is detected, then the process 800 repeats step 804.

At step 806, it is determined whether the touch event is associated with one of the elements 252 in the help window 250. If the touch event is associated with one of the elements 252, then at step 808, simulation of the software application is performed on the touch sensitive display unit 710. The simulation of the software application may involve opening a new help window 250 corresponding to the element 252 being touch by the user based on the functionality of the corresponding GUI object 202.

At step 810, it is determined that the touch event is associated with the dialog box 254 displaying the brief help information. If it is determined that the touch event is associated with the dialog box 254, then at step 812, detailed help information associated with the element 252 is displayed on the touch sensitive display unit 710 in a pop-up window. Otherwise, the process 800 ends at step 814.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device)or a propagation medium (through propagation mediums in and of themselves as signal carriers are not included in the definition of physical computer-readable medium include a semiconductor or solid state memory, magnetic tape, a removable computer diskette, a random access memory (RAM), a read-only memory (ROM), a rigid magnetic disk and an optical disk such as compact disk read-only memory (CD-ROM), compact disk-read/write) and Digital Versatile/Video Disc (DVD). Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein.

The scope of the present invention is, therefore, indicated by the following claims rather than by the foregoing description. All changes, modifications, and variations coming within the meaning and range of equivalency of the claims are to be considered within their scope.

## Claims

1. A method of automatically generating a help system (251) for a software application, the method comprising:
obtaining, using a processor (110), a plurality of graphical user interface (GUI) screens (200) associated with the software application from a GUI database (106), wherein each of the GUI screens (200) comprises one or more GUI objects (202);
determining functionality associated with the one or more GUI objects (202) in each of the GUI screens (200); and
automatically generating the help system (251) associated with the software application using the GUI screens(200)and the determined functionality.

2. The method according to claim 1, wherein determining the functionality associated with the one or more GUI objects (202) in each of the GUI screens (200) comprises:
determining the functionality associated with the one or more GUI objects (202) in the respective GUI screens (200) using an intermediate file (108), wherein the intermediate file (108) comprises business logic associated with the respective GUI objects (202).

3. The method according to claim 1, wherein automatically generating the help system (251) associated with the software application comprises:
generating help windows (250) from the GUI screens (200), wherein each of the help windows (250) comprises one or more elements (252) corresponding to the one or more GUI objects (502) in the respective GUI screens (200);
mapping textual description to the corresponding one or more elements (252) in the help windows (250); and
mapping a command to each of the one or more elements (252) in the help windows (250) based on the functionality associated with the respective one or more GUI objects (202).

4. The method according to claim 3, wherein mapping the textual description (254) to the corresponding one or more elements (252) in the help windows (250) comprises:
obtaining the textual description (254) associated with each of the GUI objects (202) in the GUI screens (200) from a source code file (102) of the software application; and
mapping the obtained textual description (254) to the associated elements (252) in the help windows (250).

5. The method according to claim 3, further comprising:
detecting a touch based event corresponding to an element (252) in one of the help windows (250) of the help system (251) displayed on a display unit (710); and
performing simulation of the software application in real time using the help system (251) in response to the detected touch based event.

6. The method according to claim 5, wherein performing simulation of the software application in real time using the help system (251) based on the touch based event comprises:
executing the command mapped to the element (252) in said one of the help windows (250) in response to the detected touch based event; and
displaying a corresponding help window from the help windows (250) on the display unit (710) in real time.

7. The method according to claim 3, further comprising:
detecting a touch based event corresponding to an element (252) in one of the help windows (250) of the help system (251) displayed on the display unit (710);
fetching detailed help information corresponding to the element (252) from a help database (712) in response to the detected touch based event; and
displaying the detailed help information corresponding to the element (252) on the display unit (710) in real time.

8. A device (100) comprising:
a processor (110); and
a memory (112)coupled to the processor (110), wherein the memory (112) includes a help system generation module (104) is capable of:
obtaining a plurality of graphical user interface (GUI) screens (200) associated with a software application from a GUI database (106), wherein each of the GUI screens (200) comprises one or more GUI objects (202);
determining functionality associated with the one or more GUI objects (202) in each of the GUI screens (200); and
automatically generating the help system (251) associated with the software application using the GUI screens(200)and the determined functionality.

9. The device (100) according to claim 8, wherein in determining the functionality associated with the one or more GUI objects (202) in each of the GUI screens (200), the help system generation module (104) is capable of:
determining the functionality associated with the one or more GUI objects (202) in the respective GUI screens (200) using an intermediate file database (108), wherein the intermediate file database (108) comprises business logic associated with the respective GUI objects (202).

10. The device (100) according to claim 8, wherein in automatically generating the help system (251) associated with the software application, the help system generation module (104) is capable of:
generating help windows (250) from the GUI screens (200), wherein each of the help windows (250) comprises one or more elements (252) corresponding to the one or more GUI objects (202) in the respective GUI screens (200);
mapping textual description to the corresponding one or more elements (252) in the help windows (250); and
mapping a command to each of the one or more elements (252) in the help windows (250) based on the functionality associated with the respective one or more GUI objects (202).

11. The device (100) according to claim 10, wherein in mapping the textual description (254) to the corresponding one or more elements (252) in the help windows (250), the help system generation module (104) is capable of:
obtaining the textual description (254) associated with each of the GUI objects (202) in the GUI screens (200) from a source code file (102) of the software application; and
mapping the obtained textual description (254) to the associated elements (252) in the help windows (250).

12. A device (702) comprising:
a touch sensitive display unit (710) capable of detecting a touch based event corresponding to an element (252) in a help window (250) of a help system (251); and
a processor (704) coupled to the touch sensitive display unit (710) and capable of performing simulation of the software application in real time using the help system (251) in response to the detected touch based event.

13. The device (702) according to claim 12, wherein in performing simulation of the software application in real time using the help system (251) based on the touch based event, the processor (704) is capable of:
executing a command mapped to the element (252) in said one of the help windows (250) in response to the detected touch based event; and
displaying a corresponding help window from the help windows (250) on the touch sensitive display unit (710) in real time.

14. The device (702) according to claim 12, wherein the touch sensitive display unit (710) is capable of:
detecting a touch based event corresponding to an element (252) in one of the help windows (250) of the help system (251).

15. The device (702) according to claim 14, wherein the processor (704) is capable of:
fetching detailed help information corresponding to the element (252) from a help database (712) in response to the detected touch based event; and
displaying the detailed help information corresponding to the element (252) on the touch sensitive display unit (710) in real time.
